# EUROPÄISCHE PATENTANMELDUNG

(11) **EP 3 851 717 A1**
(43) Veröffentlichungstag der Anmeldung: **21.07.2021**
(21) Anmeldenummer: 21152007.7
(22) Anmeldetag: 18.01.2021
(51) Int. Cl.: F16K 7/12, F16K 37/00

(54) **MASCHINENLESBARE OPTISCHE KENNZEICHNUNG EINER MEMBRAN**

(30) Priorität: 20.01.2020 DE 102020101180
(71) Anmelder: SISTO Armaturen S.A., 6468 Echternach (LU)
(72) Erfinder: BRITZ, Robert, 6468 Echternach (LU); DIECKMANN, Thomas, 6468 Echternach (LU); SCHAAL, Andreas, 6468 Echternach (LU); HACKENBERGER, Bernd, 6468 Echternach (LU)
(74) Vertreter: Busch, Tobias

(57) **Zusammenfassung**

Die Erfindung betrifft eine Membran (5), die einen Lappen (16) umfasst. Der Lappen ragt über die Membraneinspannung hinaus. Auf dem Lappen ist mindestens eine optische Kennzeichnung (17) angebracht. Diese optische Kennzeichnung (17) stellt maschinenlesbare Daten der Membran zur Verfügung.

## Beschreibung

Die Erfindung betrifft eine Membran eines Membranventils, die Räume voneinander dichtend trennt, wobei die Membran zwischen Gehäuseteilen angeordnet ist.

Membranventile können zur Dosierung von unterschiedlichen Fluiden eingesetzt werden, beispielsweise von Gasen, Dämpfen oder Flüssigkeiten. Beispielgebend können Membranventile eingesetzt werden, um hochviskose bzw. sehr stark haftfähige Medien zu dosieren bzw. zu verteilen. Bei Membranventilen wird dabei wirksam eine Ablagerung und somit auch eine Kontamination verhindert. Ventile auf Basis des Membranprinzips sind die totraumärmsten Dosierarmaturen. Neben dem sehr geringen Totraumvolumen sind Membranventile zudem entleerungsoptimiert konstruiert, sodass eine rückstandsfreie Entfernung des Mediums ermöglicht wird.

Dies ist insbesondere bei pharmazeutischen Anlagen und Fertigungsprozessen von großer Bedeutung, da diese den hohen Ansprüchen einer strengen Validierung unterliegen, mit dem Ziel, eine gleichbleibende und reproduzierbare Qualität zu gewährleisten. Aus diesen Ansprüchen resultiert die Notwendigkeit, verschiedene Prozesse innerhalb einer Anlage fahren zu können. Neben dem eigentlichen Produktionsprozess sind dies in der Regel die Reinigung, Desinfektion und Sterilisation der Anlage. Membranventile haben sich aufgrund ihrer vorteilhaften Konstruktionsmerkmale als bevorzugte Armatur in der sterilen Prozesstechnik etabliert.

Die eingesetzten Membranen bilden bewegliche, dichtende Wände, die zwei Räume mit in der Regel unterschiedlichen Medien (Gase, Flüssigkeiten) und häufig auch unterschiedlichen Druckverhältnissen voneinander trennen.

Ein wichtiges Qualitätsmerkmal einer Membran ist deren Beweglichkeit, das heißt die Fähigkeit senkrecht zur Einspannfläche (Membranfläche) einen Hub auszuführen, der mechanisch angetrieben bedingt sein kann. Weiterhin ist die Beständigkeit der Membran von Bedeutung, insbesondere wenn aggressive Medien gefördert werden.

Die Bewegungsfähigkeit und Beständigkeit einer Membran hängt im Wesentlichen vom Werkstoff ab, aus dem die Membran besteht. Als Grundwerkstoffe für Membranen werden hauptsächlich Elastomere verwendet, die zur Erzielung einer höheren Festigkeit mit Gewebeeinlagen verstärkt werden können. Als Elastomere haben sich Membranen mit Ethylen-Propylen-Dien-Kautschuk (EPDM) bewährt. Bei Ethylen-Propylen-Dien-Kautschuk (EPDM) handelt es sich um terpolymere Elastomere (Gummi) und somit um synthetische Kautschuke. Das Material zeichnet sich durch eine hohe Elastizität und gute chemische Beständigkeit aus.

Wenn Membranen in einem zugehörigen Membranventil verbaut sind, sind diese nicht mehr von außen sichtbar. Dies ist nachteilig, wenn die Membranen z. B. im Rahmen einer Instandhaltungsmaßnahme ausgetauscht werden müssen, da dann von außen nicht erkennbar ist, welcher Membrantyp im Membranventil verbaut ist. Aus diesem Grund sind Membranen mit einer angeformten Lasche bekannt geworden. Die Laschen stehen dabei derart vom Funktionsbereich der Membran ab, dass sie auch im verbauten Zustand der Membran sichtbar sind. Die Lasche ragt also gegenüber dem zugehörigen Membranventil hervor. Da die Lasche den identischen Aufbau wie die Membran aufweist, kann anhand der Lasche zumindest grob der Membrantyp erkannt werden. So kann beispielsweise ermittelt werden, ob es sich um eine einschichtige oder eine mehrschichtige Membran handelt und welche Materialien für die verschiedenen Schichten verwendet wurden. Selbstverständlich müssten dafür die verwendeten Materialien auch visuell unterscheidbar sein, was sie in den seltensten Fällen sind.

Da während des Membranaustauschs üblicherweise die Maschinen oder Anlagen, in denen das betreffende Membranventil verbaut ist, außer Betrieb gesetzt werden müssen, ist es im Sinne einer schnellen Membrantauschaktion wichtig, dass der Membrantyp schnell und zuverlässig zu erkennen ist. Insbesondere muss dies auch bei schlecht zugänglichen und schlecht einsehbaren Bauräumen möglich sein. Ein Fehler beim Ermitteln des Membrantyps kann dabei zu Verzögerungen der Membrantauschaktion führen. Für den Fall, dass eine ungeeignete Membran versehentlich im Membranventil verbaut wird, kann es zu Fehlfunktionen des Membranventils kommen. Dies gilt es zu vermeiden. Im Sinne einer effizienten Instanthaltung wäre es wünschenswert die exakten Membranspezifikationen anhand einer unverwechselbaren Kennzeichnung ermitteln zu können.

Aufgabe der Erfindung ist es, eine Membran bereitzustellen, deren Daten nachvollziehbar sowie unverwechselbar zugeordnet werden können. Dabei sollten die Daten nicht von Umweltbedingungen und industriellen Randbedingungen beeinflusst oder zerstört werden können. Die Membran soll sich auf möglichst preiswerte sowie besonders einfache Weise und mit einem möglichst geringen Materialausschuss herstellen lassen. Dabei soll sich die Membran durch eine hohe Lebensdauer und möglichst geringe Herstellungskosten auszeichnen. Mit dem Verfahren soll eine hohe Stückzahl an Membrananordnungen in möglichst gleichbleibender Qualität hergestellt werden können.

Diese Aufgabe wird erfindungsgemäß durch eine Membran sowie einem Verfahren zur Herstellung der Membran gemäß den nebengeordneten Ansprüchen gelöst. Bevorzugte Varianten sind den Unteransprüchen, der Beschreibung und der Zeichnung zu entnehmen.

Erfindungsgemäß ist an einer Membran auf dem über die Membraneinspannung hinausragenden Lappen eine optische Kennung der Membraninformation angebracht. Diese Kennung kann in Form eines Barcodes ausgeführt sein. Mittels Barcodelesegerät können die Membranspezifikation und die charakteristischen Daten erfasst werden, wodurch eine fehlerfreie Datenbasis für ein intelligentes Wartungssystem geschaffen werden kann.

Gemäß der Erfindung kann dieser Barcode als Strichkodierung ausgeführt sein, wenn nur wenige Informationen der Membran zu Verfügung gestellt werden müssen. Für einen höheren Informationsgehalt wird beispielsweise eine zweidimensionale Flächenkodierung eingesetzt. Vorteilhafterweise ist eine solche Kodierung auf den Membranlappen mit FDA-konformen Klebstoff aufgeklebt. In einer weiteren Alternative ist die Kodierung auf den Membranlappen aufgedruckt. Weiterhin ist vorstellbar, dass bei der Herstellung der Membran ein Kunststoffquadrat respektive -rechteck in einer Aussparung des Membranlappens (ein)vulkanisiert wird. Auf dieser Kunststofffläche kann die Membrankodierung beispielsweise aufgedruckt, gelasert oder aufgeklebt werden. Aufgrund der Materialbeschaffenheit des Kunststoffs ist eine bessere Sichtbarkeit und Haftbarkeit der Kodierung gewährleistet.

In einer besonders vorteilhaften Variante der Erfindung wird beim Compression-Moulding-Verfahren ein einstellbarer Prägestempel in den Membranlappen gedrückt, der während des Vulkanisierens ein dreidimensionales Höhen- und Tiefenprofil erzeugt. Dabei entsprechen die unterschiedlichen Höhenstufen einer binären Kodierung. Weiterhin ist vorstellbar, dass dieses dreidimensionale Höhen- und Tiefenprofil farbig bedruckt wird. Anhand des Farbtons, der Farbsättigung sowie der Farbhelligkeit werden weitere Membrandaten auf dem Membranlappen kodiert zur Verfügung gestellt.

Gemäß einer Variante der Erfindung sind die Membraninformationen anhand von dreidimensionalen Aussparungen am Membranlappen kodiert. In einer besonders vorteilhaften Variante sind die Aussparungen in Form eines dreidimensionalen Zackenprofils ausgebildet. Diese Art der Informationsbereitstellung wird entweder während dem Compression-Moulding-Verfahren in den Lappen eingeprägt oder nach dem Vulkanisieren aus dem Membranlappen ausgestanzt.

Erfindungsgemäß wird zwischen zwei Elastomer-Lagen eine Gewebeeinlage angeordnet. Anschließend erfolgt eine Vulkanisation der Elastomer-Lagen mit der Gewebeeinlage. Vorzugsweise werden bei der Vulkanisation die Elastomer-Lagen, die neben Ethylen-Propylen-Dien-Kautschuk (EPDM) auch Schwel bzw. aus Schwefel verwertete Stoffe, wie zum Beispiel Schwefeldifluorid, Katalysatoren bzw. Zinkoxid oder Fettsäuren enthalten können, wie auch mit Feststoffen verwertet sein können, erhitzt. Die Vulkanisation erfolgt meist mit einem Schwefelanteil von 1,8 bis 2,5 Gew.-% und einer Temperatur von ca. 120 bis 160°C. Dabei werden die langkettigen Kautschukmoleküle durch Schwefelbrücken vernetzt. Hierdurch gehen die plastischen Eigenschaften des Kautschuks bzw. der Kautschukmischung verloren und der Stoff wird mittels des Verfahrens der Vulkanisation vom plastischen in den elastischen Zustand überführt. In der Regel ist die Elastizität des Gummiwerkstoffs abhängig von der Anzahl der Schwefelbrücken. Je mehr Schwefelbrücken vorhanden sind, desto härter ist der Gummi. Die Anzahl der Schwefelbrücken ist wiederum abhängig von der zugesetzten Schwefelmenge und der Dauer der Vulkanisation.

Die EPDM-Lagen, die im Compression-Moulding-Verfahren zur Membran vulkanisiert werden, können vorteilhafterweise sehr dünn ausgeführt sein. So ist durchaus möglich, dass die Lagen nur 0,5 - 2 mm betragen.

Als besonders günstig erweist es sich, wenn bei der Membrananordnung ein stiftartiges Element formschlüssig in eine Lage integriert wird. Bei dem stiftartigen Element kann es sich um eine Membranschraube handeln. Die Membranschraube kann beispielsweise über eine Spindel mit einem Antrieb verbunden sein. Auf diese Weise kann die Membran verformt werden.

Erfindungsgemäß steht der Lappen über die Membranfläche und damit über den Funktionsbereich der Membran heraus. Dadurch ist der Lappen zum Platzieren eines Lesegerätes und somit zum Auslesen der Daten zugänglich.

Die kodierten Daten charakterisieren mindestens eine Eigenschaft der Membran, beispielsweise einen Typ der Ventilmembran, das Material der Ventilmembran, das Herstellungsdatum der Ventilmembran, den Herstellungsort, die Herstellungscharge der Ventilmembran, bestimmte Qualitätsprüfgrößen wie Toleranzen, Rautiefen, Abmessungen, etc. und bilden damit eine grundlegende Datenbasis einer effizienten Instandhaltung. In Kombination mit einer Wartungssoftware können geeignete Membranen in ausreichender Zahl vorgehalten und zum passenden Zeitpunkt verwechslungsfrei getauscht werden

Gemäß der Erfindung gliedert sich das Verfahren zur Herstellung der Membran in aufeinander folgende Fertigungsschritte. Dabei werden zunächst EPDM-Lagen aus kalandrierten Bahnen im Membranformat ausgeschnitten. An jede Lage wird an einer Seite ein Fortsatz mit ausgeschnitten, der über den späteren Funktionsausschnitt der Membran herausragen wird. Die EPDM-Lagen werden vorteilhafterweise in ein Formnest aufeinander gebettet, so dass die Fortsätze einheitlich übereinander angeordnet sind. Zwischen den Lagen kann zur Stabilisierung der Membran eine Gewebeeinlage eingefügt und zusätzlich eine Membranschraube angeordnet werden. In einer besonders vorteilhaften Variante der Erfindung drückt ein Prägestempel ein dreidimensionales Höhen- und Tiefenprofil während der Vulkanisation in den Membranlappen. Alternativ wird ein Kunststoffquadrat in einer Aussparung des Lappens (ein)vulkanisiert. Auf der Kunststofffläche kann der Barcode gelasert, aufgedruckt und/oder aufgeklebt werden. Auf diese Weise kann die Membrankodierung flexibel nach Kundenwunsch erfolgen.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: eine Schnittdarstellung eines Membranventils,
- Figur 2: eine Schnittdarstellung einer Membrananordnung,
- Figur 3: eine Darstellung des Membranlappens mit optischer Kennzeichnung,
- Figur 4: eine Darstellung des Membranlappens mit dreidimensionaler optischer Kennzeichnung,
- Figur 5: eine Darstellung des Membranlappens mit (ein)vulkanisiertem Kunststoffquadrat,
- Figur 6: eine Darstellung des Membranlappens mit dreidimensionalem Zackenprofil.

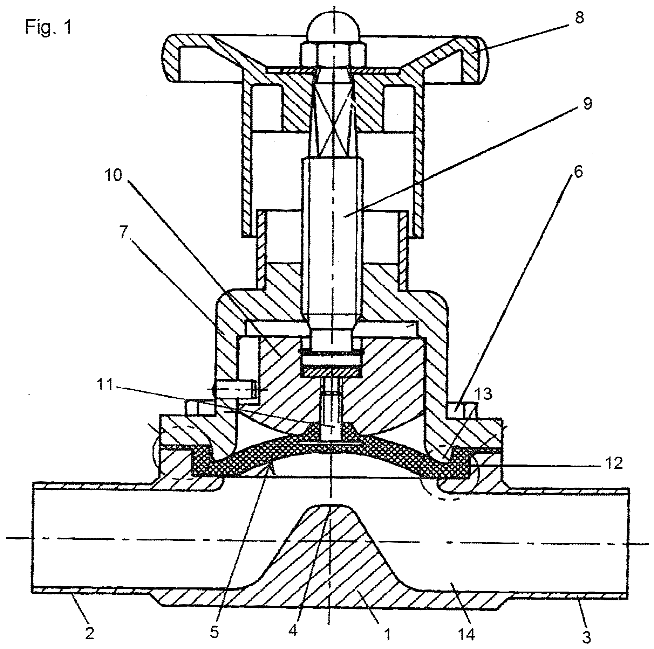

Das in Figur 1 dargestellte Membranventil besitzt ein Gehäuseunterteil 1, welches Anschlüsse 2, 3 und ein Wehr 4 umfasst. Das Wehr 4 dient als Sitzfläche für die Membran 5. Die Membran 5 ist mithilfe von Schrauben 6 eingespannt zwischen dem Gehäuseunterteil 1 und einem Gehäuseoberteil 7. Im Gehäuseoberteil 7 sind die zur Betätigung der Membran 5 notwendigen Elemente integriert, wie beispielsweise ein Antrieb 8, der im Ausführungsbeispiel als Handrad ausgeführt ist, sowie eine Spindel 9. An der Spindel 9 ist ein Druckstück 10 befestigt. Das Druckstück 10 ist verschieblich im Gehäuseoberteil 7 angeordnet und wird von einer inneren Wand des Gehäuseoberteils 7 geführt. Durch Betätigung des Antriebs 8 wird über die Spindel 9 eine horizontale Verschiebung des Druckstücks 10 bewirkt, sodass sich die Membran 5 verformt und der freie Querschnitt zwischen dem Wehr und der Membrananordnung vergrößert bzw. verkleinert werden kann.

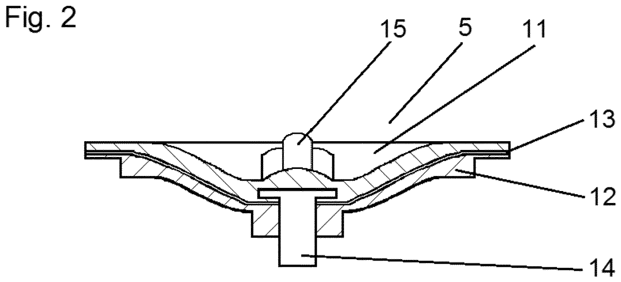

Figur 2 zeigt eine Schnittdarstellung einer Membran 5. Die Membran 5 umfasst eine erste Lage 11, die auf der Mediumseite angeordnet ist. Weiterhin umfasst die Membran 5 eine zweite Lage 12, welches die Rückseite der Membrananordnung bildet. Die beiden Lagen 11 und 12 sind aus einem Elastomer, insbesondere EPDM, gefertigt. Zwischen den beiden EPDM-Lagen 11, 12 ist eine Gewebe-Einlage 13 angeordnet. Weiterhin umfasst die Membran 5 ein stiftartiges Element 14, das im Ausführungsbeispiel als Membranschraube ausgebildet ist.

Die erste Lage der Membran 5, die der Mediumseite zugeordnet ist, weist eine Dichtlippe 15 auf. Das in Figur 2 dargestellte stiftartige Element 14 kann ein Gewinde aufweisen. Gemäß der Darstellung in Figur 1 ist das stiftartige Element 14 als Membranschraube ausgebildet und weist ein Außengewinde auf, das in ein Innengewinde eingeschraubt wird, welches in einem Druckstück 10 ausgebildet ist. Bei der Membran 5 gemäß der Darstellung in Figur 2 handelt es sich um ein Compound aus zwei EPDM-Lagen 11, 12 und einer dazwischen angeordneten Gewebe-Einlage 13, die durch Vulkanisation miteinander verbunden sind.

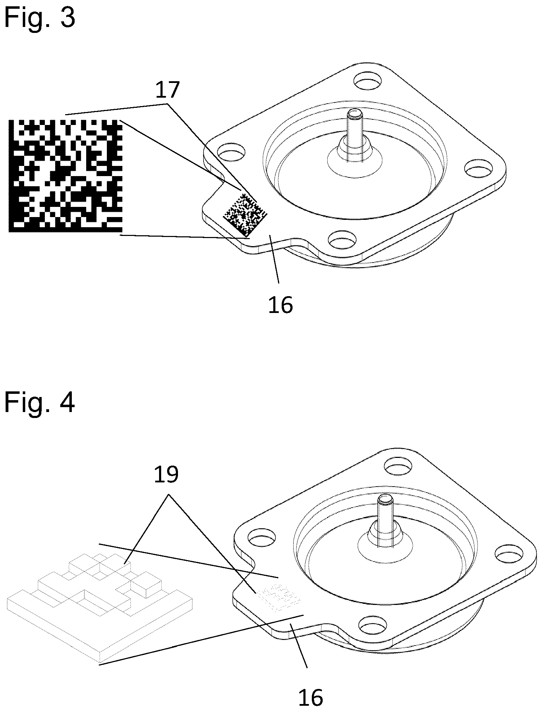

Figur 3 zeigt eine Darstellung der Membran 5. Am Membranlappen 16, der über die Funktionsfläche der Membran 5 hinausragt, ist eine zweidimensionale Flächenkodierung 17 angeordnet. Die Membraninformation kann somit im eingebauten Zustand von einem Lesegerät gut erfasst werden. Die zweidimensionale Flächencodierung ist entweder aufgedruckt oder mit einem Laser aufgebracht.

Figur 4 zeigt eine Darstellung der Membran 5, deren Membranlappen 16 über ein dreidimensionales Höhen- und Tiefenprofil 19 verfügt. Der Membranlappen 16 ragt über die Funktionsfläche der Membran 5 hinaus, wodurch die Membraninformation von einem Lesegerät gut erfasst werden kann. Das dreidimensionale Höhen- und Tiefenprofil 19 wird während dem Compression-Moulding-Verfahren mit einem einstellbaren Prägewerkzeug erzeugt. Die Informationsdichte des dreidimensionalen Höhen- und Tiefenprofil kann durch einen Farbdruck anhand des Farbtons, der Farbsättigung sowie der Farbhelligkeit erhöht werden.

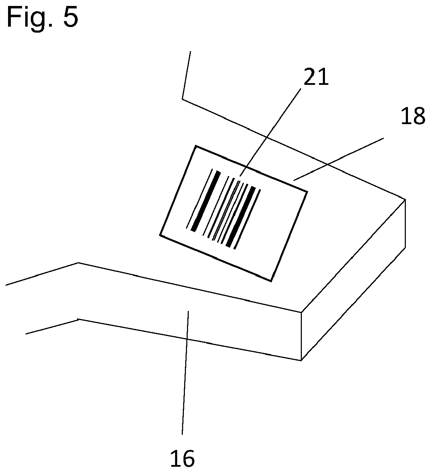

Figur 5 zeigt einen Ausschnitt der Membran 5 und dabei den Membranlappen 16. Im Membranlappen 16 ist ein Kunststoffquadrat 18 (ein)vulkanisiert. Auf dem Kunststoffquadrat 18 ist eine Strichkodierung 21 angeordnet. Diese kann aufgedruckt, aufgeklebt oder gelasert sein.

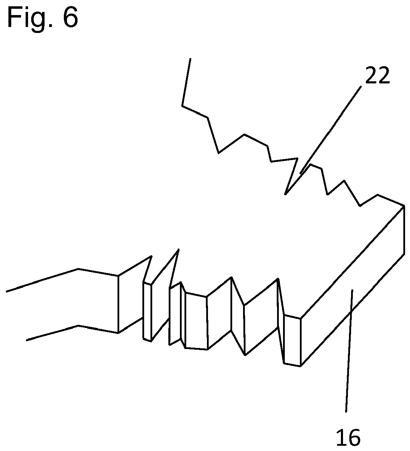

Figur 6 zeigt eine Darstellung des Membranlappens 16 als Teil der Membran 5. Am Membranlappen 16 sind dreidimensionale Aussparungen angeordnet. Dieses dreidimensionale Zackenprofil 22 stellt die Membraninformation zur Verfügung, die über ein Lesegerät ausgelesen werden kann. Diese Art der Informationsbereitstellung wird entweder während dem Compression-Moulding-Verfahren in den Lappen 16 eingeprägt oder nach dem Vulkanisieren aus dem Membranlappen 16 ausgestanzt.

## Patentansprüche

1. Membran (5), die einen Lappen (16) umfasst, der über die Membraneinspannung hinausragt, **dadurch gekennzeichnet, dass** auf dem Lappen mindestens eine optische Kennzeichnung (17) der Membran angebracht ist, die maschinenlesbare Daten der Membran zur Verfügung stellt.

2. Membran nach Anspruch 1, **dadurch gekennzeichnet, dass** mindestens eine optische Kennzeichnung als ein Barcode (17) ausgeführt ist.

3. Membran nach Anspruch 1 oder 2, **dadurch gekennzeichnet, dass** mindestens eine optische Kennzeichnung als zweidimensionaler Flächencode (17) ausgeführt ist.

4. Membran nach einem der Ansprüche 1 bis 3, **dadurch gekennzeichnet, dass** mindestens eine optische Kennzeichnung als ein dreidimensionales Höhen- und Tiefenprofil (19) ausgebildet ist.

5. Membran nach einem der Ansprüche 1 bis 4, **dadurch gekennzeichnet, dass** Membraninformationen anhand eines Farbtons und/oder einer Farbsättigung und/oder einer Farbhelligkeit bereitgestellt werden.

6. Membran nach einem der Ansprüche 1 bis 5, **dadurch gekennzeichnet, dass** die optische Kennzeichnung (21) der Membraninformation in Form eines gelaserten und/oder bedruckten Körpers (18) in einer Aussparung des Membranlappens (16) angeordnet ist.

7. Membran nach einem der Ansprüche 1 bis 6, **dadurch gekennzeichnet, dass** die Membraninformation in Form von dreidimensionalen Aussparungen (22) an den Rändern des Membranlappens (16) angeordnet sind.

8. Membran nach einem der Ansprüche 1 bis 7, **dadurch gekennzeichnet, dass** die Aussparungen an den Rändern des Membranlappens in Form eines dreidimensionalen Zackenprofils (22) ausgebildet sind.

9. Membran nach einem der Ansprüche 1 bis 8, **dadurch gekennzeichnet, dass** die Lagen (11, 12) eine Dicke von weniger als 4 mm, vorzugsweise weniger als 3 mm, insbesondere weniger als 2 mm und/oder mehr als 0,2 mm, vorzugsweise mehr als 0,4 mm, insbesondere mehr als 0,6 mm aufweisen.

10. Verfahren zur Herstellung einer Membran (5) mit optischer Kennzeichnung der Membraninformation, **dadurch gekennzeichnet, dass** die optische Kennzeichnung (19) durch ein höhen- und tiefenverstellbares Werkzeug beim Compression-Moulding-Verfahren an dem Membranlappen (16) eingeprägt wird und/oder durch ein nach einem Vulkanisieren erfolgendem Materialabtrag erstellt wird.

11. Verwendung einer optischen Information (21) auf einem Membranlappen (16) einer Ventilmembran zur Charakterisierung der Membran (5).
